(19) Europäisches Patentamt European Patent Office Office européen des brevets

(11) **EP 2 849 362 A1**

(12) **EUROPEAN PATENT APPLICATION**

(43) Date of publication:
18.03.2015 Bulletin 2015/12

(51) Int Cl.:
**H04B 10/61** (2013.01)

(21) Application number: **13306246.3**

(22) Date of filing: **11.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Renaudier, Jérémie
91620 Nozay (FR)**
• **Bertran-Pardo, Oriol
91620 Nozay (FR)**

(74) Representative: **Hirsch & Associés
137, rue de l'Université
75007 Paris (FR)**

(54) **Blind frequency offset estimation for pulse-shaped signals**

(57)  This invention relates to a receiver for detecting an optical signal, comprising a processing chain (DSP) being adapted for
- Receiving an optical signal transmitted via an optical transmission channel;
- Determining an estimation of a chromatic dispersion of said optical transmission channel; and compensating said optical signal for said chromatic dispersion on the basis of said estimation;
- And being further adapted to determine a frequency offset and to compensate said optical signal for said frequency offset before the determination of said estimation of said chromatic dispersion.

Fig. 1

## Description

<u>FIELD OF THE INVENTION</u>

The invention relates to the reception of optical signal via an optical transmission channel. More precisely, the invention relates to a method of reception when the signal is a pulse-shaped signal.

<u>BACKGROUND OF THE INVENTION</u>

In optical transmission channel like optical fiber, it is known to increase the spectral width of the in order to increase the quantity of data that can be transmitted through the fiber during a time unit. Accordingly, the signal may be constituted by different signal components having different frequencies,

The propagation time along the optical fiber depends on the frequencies of the signal components, so that a so-called "chromatic dispersion" occurs and impacts the transmitted optical signal.

At the reception end, the chromatic dispersion is usually evaluated for cancelling, or at least reducing, its effects and, then enable the receiver to detect and decode the transmitted signal.

Chromatic dispersion can be compensated by using linear filter in the time domain, according to an estimation of its value than can be done by several methods known in the art.

A possible method has been described in the European patent application EP 2 372 332. According to this piece of prior art, the chromatic dispersion is determined by determining two complex discrete frequency components, with frequencies spaced by the symbol rate of the optical signal, and then determining a phase value based on these components and then the chromatic dispersion from this phase value.

Another technique that has been proposed recently for increasing further the transmission capacity of optical fibers consists in reducing the frequency spectral footprint of each individual transmitted signal components.

Pulse-shaped signal components are of particular interest because they allow increasing the information spectral density (ISD) without inducing inter-symbol interference (ISI) according to the Nyquist ISI criterion.

Today, optical transmission systems based on Nyquist pulse-shaped signals are research topics and not deployed products exist on the market. In the future, thus, some products will implement receiving interfaces adapted to receive Nyquist pulse-shaped signal and to determine the chromatic dispersion of this signal as previously described.

<u>SUMMARY OF THE INVENTION</u>

The object of the present invention is to allow implementing this chromatic dispersion compensation in the context of transmitted signals which are Nyquist pulse-shaped.

This object is achieved with a method of detecting an optical signal, comprising steps of
Receiving an optical signal transmitted via an optical transmission channel;
Determining an estimation of a chromatic dispersion of said optical transmission channel; and compensating said optical signal for said chromatic dispersion on the basis of said estimation;
Wherein a frequency offset is determined and said optical signal is compensated for said frequency offset before said step of determining an estimation of a chromatic dispersion

Preferred embodiments comprise one or more of the following features, which can be taken separately or together, either in partial combination or in full combination.

- said optical signal is pulse-shaped.
- said optical signal has a roll-off factor below 0.2.
- said frequency offset is determined by comparing spectral values of said optical signal at two frequency bands around -B/2 and +B/2 of the center of the spectrum of said optical signal, wherein B represents the baudrate of said optical signal.
- comparing spectral values comprises defining two function $S^+$, $S^-$, as $S^- = \left| S\left(\left| f - \frac{B}{2} \right| + \Delta f \right) \right|$ and $S^+ = \left| S\left(\left| f + \frac{B}{2} \right| + \Delta f \right) \right|$, wherein f is the frequency, and $\Delta f$ a preset parameter, and defining a cost function C from said two function which optimal value provides said estimation;
- said cost function C is defined as $C = |S^+ - S^-|$.
- said cost function C is defined as $C = S^+ \times S^-$.

Another aspect of the invention is a computer program product comprising computer-executable instructions for performing a method as previously described, when the program is run on a computer.

Another aspect of the invention is a digital data storage medium encoding a machine-executable program of instructions to perform a method as previously described.

Another aspect of the invention concerns a receiver for detecting an optical signal, comprising a processing chain being adapted for
Receiving an optical signal transmitted via an optical transmission channel;
Determining an estimation of a chromatic dispersion of said optical transmission channel; and compensating said optical signal for said chromatic dispersion on the basis of said estimation;
And being further adapted to determine a frequency offset and to compensate said optical signal for said frequency offset before the determination of said estimation of said chromatic dispersion.

Preferred embodiments comprise one or more of the following features, which can be taken separately or together, either in partial combination or in full combination.

- The receiver is adapted for receiving a pulse-shaped optical signal.
- said frequency offset is determined by comparing spectral values of said optical signal at two frequency bands around -B/2 and +B/2 of the center of the spectrum of said optical signal, wherein B represents the baudrate of said optical signal.
- The receiver is adapted for comparing spectral values by defining two function $S^+$, $S^-$, a s

$$S^- = \left| S\left( \left| f - B/2 \right| + \Delta f \right) \right| \qquad \text{and}$$

$$S^+ = \left| S\left( \left| f + B/2 \right| + \Delta f \right) \right|,$$ wherein f is the frequency, and $\Delta f$ a preset parameter, and by defining a cost function C from said two function which optimal value provides said estimation.
- said cost function C is defined as $C = |S^+ - S^-|$.

Another aspect of the invention concerns an optical transmission system comprising at least a receiver as previously described.

Further features and advantages of the invention will appear from the following description of embodiments of the invention, given as nonlimiting examples, with reference to the accompanying drawings listed hereunder.

BRIEF DESCRIPTION OF THE DRAWINGS

Fig. 1 shows an example for a signal processing chain at the receiver.
Figs. 2a and 2b show frequency spectrums of possible signals received by the receiver.
Fig. 3 illustrates an experimental example of a spectrum of a received signal.
Fig. 4 shows the power profile for the two functions, $S^-$, $S^+$, according to an embodiment of the invention applied on a particular example.
Figs. 5a and 5b shows the results of a possible cost function applied on two examples.

DETAILED DESCRIPTION OF THE INVENTION

An optical system is typically made of an emitter transmitting an optical signal by a laser to a receiver through an optical channel like an optical fiber. Before the received signal being usable, it should be processed by the receiver to take into account the channel's transfer function, compensate for chromatic dispersion, recover the frequency offset, etc.

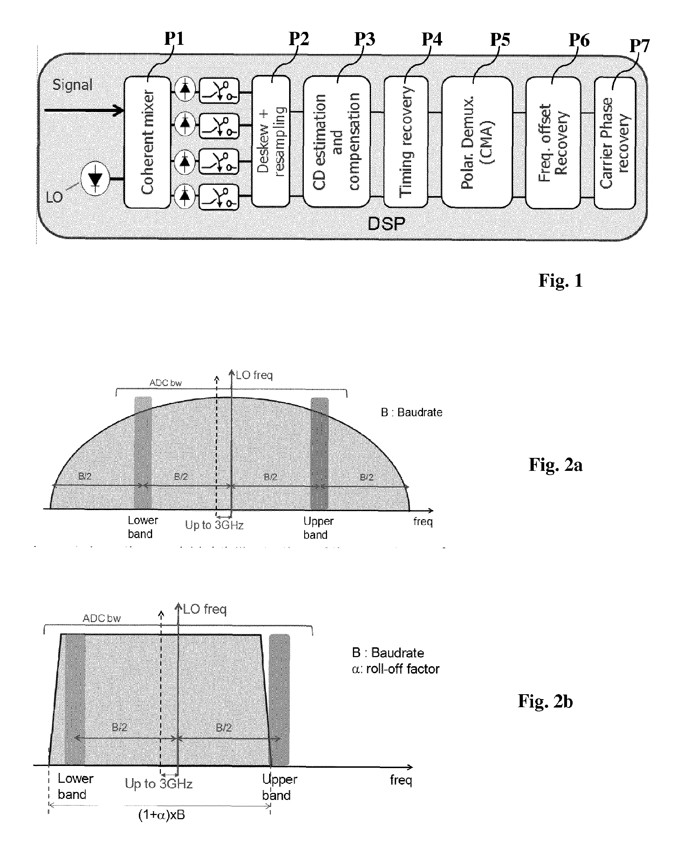

FIG. 1 shows a possible and non-limitative signal processing chain at the receiver end. This chain is here implemented by a digital signal processor (DSP). It can be understood that it can be provided by dedicated hardware as well as hardware capable of executing software in association with appropriate software. When provided by a processor, the functions, given below, can be provided by a single dedicated processor, or by a plurality of processors.

The signal flows through a coherent mixer (P1), and then through a set of successive circuitries: deskewing and resampling (P2) of the signal, chromatic dispersion (CD) estimation and compensation (P3), Timing recovery (P4), Polarization demultiplexing (P5), Frequency Offset Recovery (P6), Carrier Phase Recovery (P7). Most of these processing circuits are not directly connected with the invention and will not be described further.

FIG. 2a depicts the frequency spectrum of a possible signal transmitted over the optical fiber. In this figure, B represents the baudrate or symbol rate.

As it has been mentioned before, the chromatic dispersion can be estimated on the basis of two complex discrete frequency components, with frequencies spaced by the symbol rate B. These two components are depicted as two frequency bands: a lower band and an upper band at, respectively -B/2 and +B/2.

From the signal values within these two bands, a phase value can be determined, on the basis of which the chromatic dispersion can be determined.

FIG. 2b depicts a Nyquist pulse-shaped signal.

Several pulse-shaped signals can be applicable, while being compliant with the Nyquist ISI criterion. However, the most used one is the raised cosine signal because it is easier to implement.

As mentioned earlier, the Nyquist ISI criterion describes the conditions which, when satisfied, result in no inter-symbol interference or ISI. If we denote the channel impulse response as h(t), then the condition for an ISI-free response can be expressed as:

$$h\left( nT_s \right) = \begin{cases} 1; \; n = 0 \\ 0; \; n \neq 0 \end{cases}$$ for all integers n, where $T_s$ is the symbol period.

The Nyquist theorem says that this is equivalent

$$\text{to } \frac{1}{T_s} \sum_{k=-\infty}^{+\infty} H\left( f - \frac{k}{T_s} \right) = 1 \, ,$$ where H(f) is the Fourier transform of the channel impulse response h(t).

This represents the Nyquist ISI criterion.

Compared with other signal shapes, like the one depicted on figure 2a, the pulse-shaped signal has the advantage of having a reduced frequency spectrum. As the optical channel has a limited frequency bandwidth, the more reduced is the spectrum for each transmitted optical signals, the more signals can be transmitted on the same time window. This propriety can of course be used to increase the capacity of the optical transmission channel.

The signal represented on figure 2b has a roll-off factor $\alpha$. This roll-off factor implies an excess bandwidth of the signal beyond the baud-rate B. Therefore, the full bandwidth of the signal becomes $(1+\alpha)\times B$. When the roll-off factor $\alpha$ equals to zero, the pulse-shaped signal becomes a square signal. In practice, the roll-off factor is not equal to zero but is small, for instance, $\alpha<0.2$.

When the roll-off factor is close to zero, the full bandwidth is approximately equal to B.

As the receiver's oscillator is not phase-locked with the optical signal transmitted by the emitter, a frequency offset can appear. The value of the frequency offset is not known by the receiver can determine it in a blind way or by the use of special data transmitted over the channel. Blind estimation of the frequency offset is preferable as it does not impact the payload of the transmitted data and is independent of the modulation scheme for transmitting the data.

The value of frequency offset depends on the physical characteristics of the optical transmission channel. It typically ranges between +2GHz and -2GHz. It is usually below $\pm3$GHz.

The effect of such a frequency offset is visible on the sample spectrums depicted on the figures 2a and 2b: the curves representing the spectrums are shifted along the frequency axis. In the illustrated examples of the figures, they are shifted to the left as the frequency offset is positive.

Turning back to the figure 1, the processing of the received optical signal comprises, at step P3, the determination of the chromatic dispersion implied by the optical transmission channel, and the compensation of the optical signal on the basis of this estimation.

As previously mentioned, an estimation of the chromatic dispersion can be determined on the basis of a phase value, itself determined from the upper and lower bands at, respectively -B/2 and +B/2, wherein B is the baudrate of the received optical signal.

This method for estimating the chromatic dispersion has been described in the EP 2 372 332 patent application.

For the signal shape depicted on figure 2a, the presence of the frequency offset does not involve any particular problem.

For the signal shape (pulse shape) depicted on figure 2b, a technical problem can be expected.

The footprint of the Nyquist pulse-shaped signal is equal to $(1+\alpha)\times B$. The energy (i.e. quantity of information) at frequencies below -B/2 and above +B/2 are dramatically reduced and even negligible. However, the presence of the frequency offset shifts the signal spectrum, so that one of the bands (here the upper band at +B/2) falls partially out of the footprint. The more important is the frequency offset, the less the band overlaps the signal spectrum. In the worst case, there is not overlap, so that one of the bands contains no energy. In general case, the overlap is small, depending on the size of the bands, and the energy of the signal within one of the band is low.

Up to now, no products have been deployed implementing such estimation method for chromatic dispersion in the context of pulse-shaped signal - a fortiori Nyquist pulse shaped signal. The previous practical implementations of this estimation method are based on wider band signals like the one depicted on figure 2a.

Consequently, the situation depicted above has not been met. However, in such a situation, the low energy within one of the bands results in difficulties to determine the chromatic dispersion estimation on the basis of the signal values within these bands. In general, thus, the method fails and no estimation of the chromatic dispersion can be determined.

This technical problem has not yet appeared but has been made apparent by internal studies and experimentations of the applicant.

Consequently, a solution should be found to solve this problem and to allow the steps P3 of estimation and compensation of the chromatic dispersion to perform without failure, even in the case of Nyquist pulse-shaped signal.

Therefore, it is proposed to implement steps of determination of this frequency offset and of compensation for this frequency offset before the steps P3 of determining an estimation of a chromatic dispersion.

These additional steps can be performed after the step P2 of deskewing and resampling of the optical signal. The step P6 of Frequency Offset Recovery depicted on figure 1 can still be implemented to provide a fine-grained estimation and recovery, which can be useful for the subsequent treatment of the optical signal. Although not as accurate as this step P6, the additional proposed steps are sufficient to compensate for the frequency offset so that the chromatic dispersion can be well estimated and compensated.

According to an embodiment of the invention, the frequency offset is determined by comparing spectral values of the received optical signal at two frequency bands around -B/2 and +B/2 of the center of the spectrum of the signal, wherein B represents the baudrate of this optical signal.

This embodiment exploits the property of the Nyquist pulse shaping that implies an important slope modification of the magnitude of the spectral components around the clock tone (i.e. center of the clock tone) $\pm$B/2.

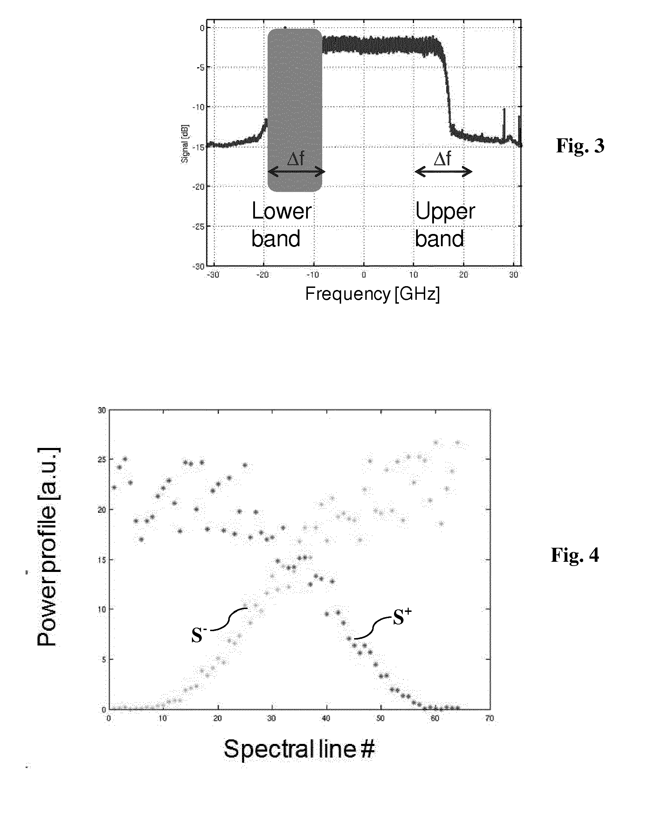

This embodiment consists in first identifying these two bands in the spectrum of the received optical signal. FIG. 3 illustrates such a spectrum for an experimental example. It shows the signal in dB according to the frequency indicated as offset from the clock tone (corresponding to 0) and expressed in GHz.

The width $\Delta f$ of the upper and lower bands can be set as a parameter of the processing step. Its value can be preset according to the maximum expected frequency offset. As earlier said, this maximum expected frequency offset can be around 3GHz.

For comparing the spectral values of the received optical signal at the upper and lower frequency bands, one can define two functions S+, S-.

These values can be defined as:

$$S^- = \left| S\left( \left| f - \frac{B}{2} \right| + \Delta f \right) \right|$$

$$S^+ = \left| S\left( \left| f + \frac{B}{2} \right| + \Delta f \right) \right|,$$

wherein f is the frequency.

They can be computed only for the spectral lines within the lower and upper bands.

According to an embodiment of the invention, the values of S+ and S- can be mean values determined from values taken on several measurement intervals. This embodiment provides the advantage of decreasing the influence of the noise.

FIG. 4 shows the power profile for these two functions according to the spectral lines within the bands. The number of spectral lines depends on the size of the FFT (Fast Fourier Transform) applied to the optical signal; and, consequently, the accuracy of the estimation of the frequency offset depends on this size of the FFT. In practice, the accuracy can be 12 MHz, which is sufficient for the next step consisting the estimating and compensating the chromatic dispersion.

From these two functions S+, S-, one can further define a cost function which optimal value provides the estimation for the frequency offset.

Several embodiments for the cost function C are possible, like for instances:

$$C = \left| S^+ - S^- \right|$$

or

$$C = S^+ \times S^-$$

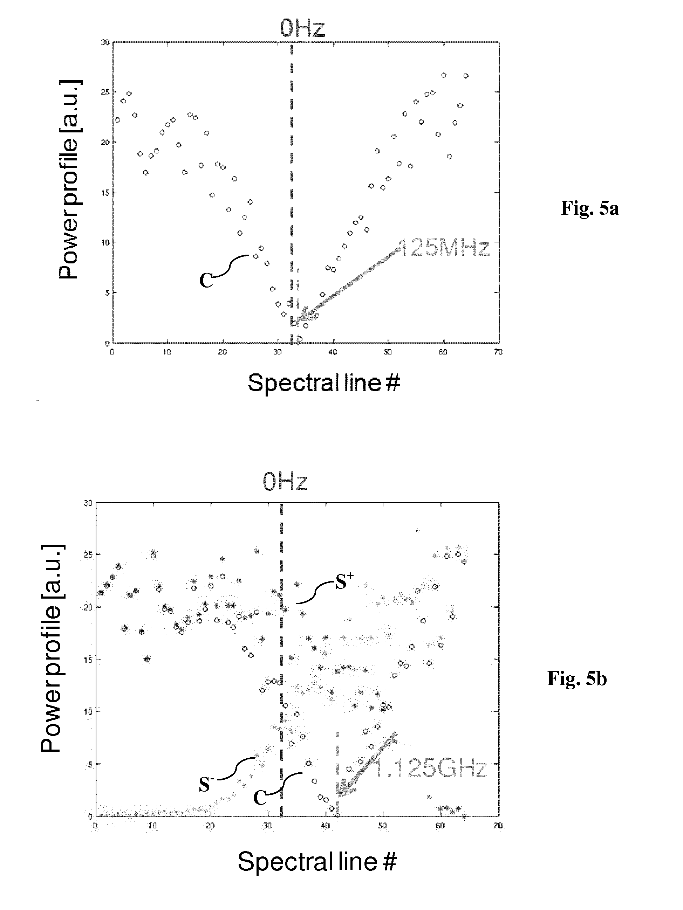

FIGs. 5a and 5b show the results of this cost function $C = |S^+ - S^-|$ applied on the two functions S+, S- of the example depicted on the figure 4, in the case of, respectively a small negative frequency offset (of -125 MHz) and an important positive frequency offset (equal to 1.125 MHz). The figure 5b shows, in addition to the cost function C, the two functions S+, S-.

In this case, the optimal value providing the estimation for the frequency offset is the minimal value of this cost function C.

The figure 5a shows clearly a minimal value at 125 MHz (i.e. one spectral line to the right of the 0 Hz vertical line). The figure 5b shows a minimal value at 1.125 MHz (i.e. 9 spectral lines to the right of the 0 MHz spectral line).

The invention has been described with reference to preferred embodiments. However, many variations are possible within the scope of the invention.

A person skilled in the art would recognize that steps of various above-described methods can be performed by programmed computers or data-processing units. Herein, some embodiments of the invention are also intended to cover program storage devices and such computers and data-processing units.

**Claims**

1. Method of detecting an optical signal, comprising steps of

   - Receiving an optical signal transmitted via an optical transmission channel;
   - Determining an estimation of a chromatic dispersion of said optical transmission channel; and compensating said optical signal for said chromatic dispersion on the basis of said estimation;
   - Wherein a frequency offset is determined and said optical signal is compensated for said frequency offset before said step of determining an estimation of a chromatic dispersion.

2. Method according the previous claim, wherein said optical signal is pulse-shaped.

3. Method according to the previous claim, wherein said optical signal has a roll-off factor below 0.2.

4. Method according to any of the previous claims, wherein said frequency offset is determined by comparing spectral values of said optical signal at two frequency bands around -B/2 and +B/2 of the center of the spectrum of said optical signal, wherein B represents the baudrate of said optical signal.

5. Method according to the previous claim, wherein comparing spectral values comprises defining two function S+, S-, as $S^- = \left| S\left( \left| f - \frac{B}{2} \right| + \Delta f \right) \right|$ and

   $S^+ = \left| S\left( \left| f + \frac{B}{2} \right| + \Delta f \right) \right|$, wherein f is the frequency, and $\Delta f$ a preset parameter, and defining a cost function C from said two function which optimal value provides said estimation.

6. Method according to the previous claim, wherein said cost function C is defined as $C = |S^+\text{-}S^-|$.

7. Method according to claim 5, wherein said cost function C is defined as $C = S^+ \times S^-$.

8. Computer program product comprising computer-executable instructions for performing a method according to any of previous claims, when the program is run on a computer.

9. Digital data storage medium encoding a machine-executable program of instructions to perform a method according to any of the claims 1 to 7.

10. Receiver for detecting an optical signal, comprising a processing chain (DSP) being adapted for

- Receiving an optical signal transmitted via an optical transmission channel;
- Determining an estimation of a chromatic dispersion of said optical transmission channel; and compensating said optical signal for said chromatic dispersion on the basis of said estimation;
- And being further adapted to determine a frequency offset and to compensate said optical signal for said frequency offset before the determination of said estimation of said chromatic dispersion.

11. Receiver according the previous claim, adapted for receiving a pulse-shaped optical signal.

12. Receiver according to claim 10 or 11, wherein said frequency offset is determined by comparing spectral values of said optical signal at two frequency bands around -B/2 and +B/2 of the center of the spectrum of said optical signal, wherein B represents the baudrate of said optical signal.

13. Receiver according to the previous claim, being adapted for comparing spectral values by defining two function S+, S-, as $S^- = \left| S\left( \left| f - \dfrac{B}{2} \right| + \Delta f \right) \right|$

and $S^+ = \left| S\left( \left| f + \dfrac{B}{2} \right| + \Delta f \right) \right|$, wherein f is the frequency, and $\Delta f$ a preset parameter, and by defining a cost function C from said two function which optimal value provides said estimation.

14. Receiver according to the previous claim, wherein said cost function C is defined as $C = |S^+\text{-}S^-|$.

15. Optical transmission system comprising at least a receiver according to any of claims 10 to 14.

**Fig. 1**

**Fig. 2a**

**Fig. 2b**

Fig. 3

Fig. 4

Fig. 5a

Fig. 5b

Europäisches
Patentamt

European
Patent Office

Office européen
des brevets

# EUROPEAN SEARCH REPORT

**Application Number**

EP 13 30 6246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/145075 A1 (HUAWEI TECH CO LTD [CN]; XIE CHANGSONG [DE]) 23 December 2010 (2010-12-23) | 1-3, 8-11,15 | INV. H04B10/61 |
| Y | * abstract * * figures 2-4 * | 4-7, 12-14 | |
| X | EP 2 608 436 A1 (HUAWEI TECH CO LTD [CN]) 26 June 2013 (2013-06-26) * abstract * * paragraph [0056] * * figures 3A, 3B * | 1-3, 8-11,15 | |
| X | WO 2012/100253 A2 (VIASAT INC [US]; MO FAN [US]; THESLING WILLIAM [US]; NIMON MATTHEW [US]) 26 July 2012 (2012-07-26) * paragraphs [0036] - [0041] * * figure 5 * | 1-3, 8-11,15 | |
| X | US 2009/142076 A1 (LI LEI [CN] ET AL) 4 June 2009 (2009-06-04) * paragraphs [0048], [0050] * * figure 9 * | 1-3, 8-11,15 | TECHNICAL FIELDS SEARCHED (IPC) |
| X | US 2012/033965 A1 (ZHANG ZHUHONG [CA] ET AL) 9 February 2012 (2012-02-09) * paragraph [0032] * * paragraph [0058] * | 1-3, 8-11,15 | H04B |
| Y | EP 2 584 720 A1 (NIPPON TELEGRAPH & TELEPHONE [JP]) 24 April 2013 (2013-04-24) * abstract * * paragraphs [0056] - [0068] * * figures 1-3 * | 4-7, 12-14 | |

-/--

The present search report has been drawn up for all claims

| Place of search | Date of completion of the search | Examiner |
|---|---|---|
| Munich | 20 February 2014 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 6246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TADAO NAKAGAWA ET AL: "Wide-range and fast-tracking frequency offset estimator for optical coherent receivers", 36TH EUROPEAN CONFERENCE AND EXHIBITION ON OPTICAL COMMUNICATION : (ECOC 2010) ; TORINO, ITALY, 19 - 23 SEPTEMBER 2010, IEEE, PISCATAWAY, NJ, USA, 19 September 2010 (2010-09-19), pages 1-3, XP031789538, ISBN: 978-1-4244-8536-9 * the whole document * ----- | 4-7, 12-14 | |

TECHNICAL FIELDS
SEARCHED     (IPC)

The present search report has been drawn up for all claims

| Place of search | Date of completion of the search | Examiner |
|---|---|---|
| Munich | 20 February 2014 | Rolan Cisneros, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 30 6246

This annex lists the patent family members relating to the patent documents cited in  the above-mentioned European search report.
The members are as contained in the European Patent Office EDP file on
The European Patent Office is in no way liable for these particulars which are merely given for the purpose of information.

20-02-2014

| Patent document cited in search report | | Publication date | Patent family member(s) | | Publication date |
|---|---|---|---|---|---|
| WO 2010145075 | A1 | 23-12-2010 | CA | 2765362 A1 | 23-12-2010 |
| | | | CN | 102439877 A | 02-05-2012 |
| | | | EP | 2436127 A1 | 04-04-2012 |
| | | | US | 2012087680 A1 | 12-04-2012 |
| | | | WO | 2010145075 A1 | 23-12-2010 |
| EP 2608436 | A1 | 26-06-2013 | CN | 102308546 A | 04-01-2012 |
| | | | EP | 2608436 A1 | 26-06-2013 |
| | | | US | 2013209098 A1 | 15-08-2013 |
| | | | WO | 2012106928 A1 | 16-08-2012 |
| WO 2012100253 | A2 | 26-07-2012 | CN | 103329497 A | 25-09-2013 |
| | | | EP | 2666272 A2 | 27-11-2013 |
| | | | US | 2012189318 A1 | 26-07-2012 |
| | | | WO | 2012100253 A2 | 26-07-2012 |
| US 2009142076 | A1 | 04-06-2009 | CN | 101453269 A | 10-06-2009 |
| | | | JP | 5146285 B2 | 20-02-2013 |
| | | | JP | 2009135930 A | 18-06-2009 |
| | | | JP | 2013048453 A | 07-03-2013 |
| | | | US | 2009142076 A1 | 04-06-2009 |
| US 2012033965 | A1 | 09-02-2012 | US | 2012033965 A1 | 09-02-2012 |
| | | | WO | 2012016548 A1 | 09-02-2012 |
| EP 2584720 | A1 | 24-04-2013 | CN | 102934378 A | 13-02-2013 |
| | | | EP | 2584720 A1 | 24-04-2013 |
| | | | US | 2013070874 A1 | 21-03-2013 |
| | | | WO | 2011158932 A1 | 22-12-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2372332 A